# FASCICULE DE BREVET EUROPEEN

(11) **EP 4 237 698 B1**
(45) Date de publication et mention de la délivrance du brevet: **29.10.2025**
(21) Numéro de dépôt: 21785942.0
(22) Date de dépôt: 14.09.2021
(51) Int. Cl.: F16D 55/00, F16D 65/00

(54) **DISPOSITIF DE FREINAGE COMPORTANT UN PROTECTEUR DE DISQUE ET VÉHICULE COMPORTANT UN TEL DISPOSITIF DE FREINAGE**
BREMSVORRICHTUNG MIT EINEM SCHEIBENSCHUTZ UND FAHRZEUG MIT EINER SOLCHEN BREMSVORRICHTUNG
BRAKING DEVICE COMPRISING A DISC GUARD AND VEHICLE COMPRISING SUCH A BRAKING DEVICE

(30) Priorité: 30.10.2020 FR 2011147
(43) Date de publication de la demande: 06.09.2023
(73) Titulaire: Stellantis Auto SAS, 78300 Poissy (FR)
(72) Inventeur: SCHANG, Vincent, 68700 UFFHOLTZ (FR); LAMORLETTE, Bruno, 78800 HOUILLES (FR)
(74) Mandataire: BCIP
(86) Numéro de dépôt international: PCT/FR2021/051564
(87) Numéro de publication internationale: WO 2022/090639

(56) Documents cités:
- EP-A1- 1 570 189
- DE-A1- 102010 024 417
- US-A1- 2020 102 991
- US-A1- 2020 102 992

## Description

La présente invention revendique la priorité de la demande française N°2011147 déposée le 30.10.2020.

La présente invention concerne un dispositif de freinage pour un véhicule qui comporte un frein à disque et un protecteur de disque, elle concerne aussi un véhicule qui comporte un tel dispositif de freinage.

La présente invention concerne plus particulièrement un tel dispositif un dispositif de freinage qui comporte un frein à disque et un protecteur de disque, le protecteur de disque recouvrant au moins partiellement la face interne du disque de frein, le protecteur de disque présentant une première partie positionnée à une première distance du disque de frein et une seconde partie positionnée à une seconde distance du disque de frein, ladite seconde distance étant supérieure à ladite première distance et étant adaptée pour évacuer des éléments externes qui peuvent se glisser entre la première partie du protecteur de disque et le disque de frein.

Un tel protecteur de disque est par exemple divulgué dans le document FR-A1-2803643 permettant de protéger la face interne, orientée vers le porte moyeu de la roue, du disque de frein des éléments extérieures tels que l'eau, le sel, les gravillons.

D'autres protecteurs de disques sont divulgués dans US 2020/102991 A1 et US 2020/102992 A1.

Mais il arrive que des éléments externes viennent se positionner entre le protecteur de disque et la face interne du disque de frein et du fait de la forme en partie fermée du protecteur de frein, l'élément externe ne peut s'évacuer et crée des bruits et des vibrations dans le dispositif de freinage.

Le dispositif selon l'invention permet de remédier à cet inconvénient.

Il comporte en effet, selon l'invention, un dispositif de freinage pour un véhicule qui comporte un frein à disque et un protecteur de disque, le protecteur de disque recouvrant au moins partiellement la face interne du disque de frein, le protecteur de disque présentant une première partie positionnée à une première distance du disque de frein et une seconde partie positionnée à une seconde distance du disque de frein, ladite seconde distance étant supérieure à ladite première distance, ladite protection de frein comporte une ouverture centrale qui correspond à une ouverture centrale du disque de frein, tel que la seconde partie forme une goulotte qui s'étend d'un premier bord du protecteur de disque positionné en regard du bas du disque de frein vers l'ouverture centrale dudit protecteur de disque permettant de guider vers le bas du disque de frein des éléments externes qui se glissent entre le disque de frein et la première partie de la protection de disque lors du roulage du véhicule.

Selon l'invention, la goulotte présente une largeur qui augmentant de l'ouverture centrale en direction du bord inférieur du disque.

Selon l'invention, la largeur de la goulotte au niveau de l'ouverture centrale est entre trois et cinq fois inférieure à la largeur de la goulotte au niveau du bord inférieur du disque.

De préférence, la première partie du protecteur de disque est à une première distance comprise entre 5 mm et 10 mm du disque de frein.

De préférence, la seconde partie du protecteur de disque est à une seconde distance comprise entre 11 mm et 15 mm du disque de frein.

De préférence, la première et la seconde partie du protecteur de disque sont formées par emboutissage à partir d'une plaque en tôle. La présente invention concerne aussi un véhicule qui comporte un tel dispositif de freinage.

Les dessins annexés illustrent l'invention :
[Fig. 1] représente un dispositif de freinage comportant un protecteur de disque selon un premier mode de réalisation de l'invention.
[Fig. 2] représente une vue de détails du protecteur de disque selon le premier mode de réalisation de l'invention.
[Fig. 3] représente une vue de détails, de côté, du dispositif de freinage comportant le protecteur de disque selon le premier mode de réalisation de l'invention.
[Fig. 4] représente un dispositif de freinage destinée à freiner les roues arrières du véhicule comportant un protecteur de disque selon un second mode de réalisation de l'invention.

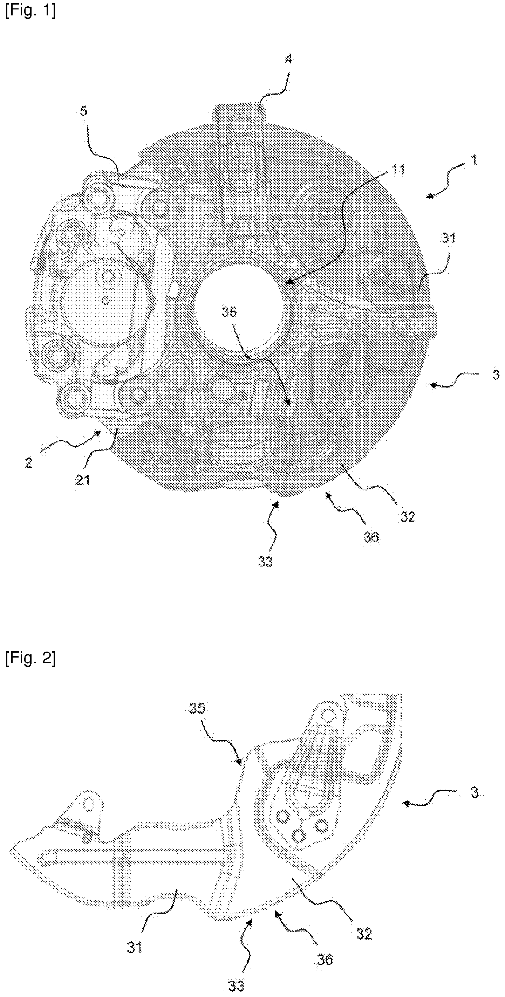

En référence aux figures 1 à 3, sont représentées différentes vues d'un dispositif de freinage 1 qui comporte un frein à disque 2 et un protecteur de disque 3.

Le protecteur de disque 3 recouvre au moins partiellement une face interne 21 du disque de frein 2.

Le protecteur de disque 3 présente une première partie 31 positionnée à une première distance d1 du disque de frein 2 et une seconde partie 32 positionnée à une seconde distance d2 du disque de frein 2, la seconde distance d2 étant supérieure à la première distance d1.

Le dispositif de freinage 1 est adapté pour être fixé sur un ensemble moyeu de roue et porte moyeu de roue 4 et comporte en son centre une ouverture 11.

Le dispositif de freinage 1 comporte aussi un étrier de frein 5 qui n'est pas recouvert par le protecteur de disque 3, le protecteur de disque 3 présente donc la forme d'un disque en forme de C avec une ouverture centrale qui correspond à l'ouverture 11 du dispositif de freinage 1 et une section en moins à l'emplacement de l'étrier de frein 5.

Sur environ 90% de sa surface, le protecteur de disque 3 est espacé du disque de frein 2 de la première distance d1, le reste étant espacé de la seconde distance d2.

La seconde partie 32 du protecteur de disque 3 forme une goulotte 33 d'évacuation d'éléments externes tels que des graviers qui s'étend d'un premier bord inférieur 34 qui est positionné en regard du bas du disque de frein 3 vers l'ouverture centrale 11.

La goulotte 33 présente une section d'entrée 35 qui est délimitée par la largeur de la seconde partie 32 du protecteur de disque 3 au niveau de l'ouverture centrale 11 et une section de sortie 36 qui est délimitée par la largeur de la seconde partie 32 du protecteur de disque 3 au niveau du bord inférieur 34.

La section d'entrée 35 de la goulotte 33 présente une largeur qui est entre trois et cinq fois inférieure à la largeur de la section de sortie 36, avec comme exemple de dimensionnement une largeur de la section d'entrée 35 de 8 mm et une largeur de la section de sortie 36 de 32 mm.

La première partie 31 du protecteur de disque 3 est à une première distance d1 qui est en générale entre une fois et demi et une fois plus petite que la section d'entrée 35 de la goulotte 33, soit en général une valeur de la distance d1 comprise entre 5 mm et 10 mm pour un disque de frein 2 neuf.

La seconde partie 32 du protecteur de disque 3 est à une seconde distance d2 qui est supérieure à la première distance d1 et qui est généralement comprise entre 11 mm et 15 mm pour un disque de frein 2 neuf.

L'usure du disque de frein 2 augment ces distances d1 et d2 du fait que le protecteur de disque 3 est fixé sur le porte moyeu de roue 4.

Cette valeur de distance d1 ne doit pas être trop importante pour protéger efficacement le disque de frein 2 des projections de graviers et autres éléments externes qui peuvent être projetés contre le disque de frein 2, mais un jeu minimum doit être conservé pour faciliter le montage et la fixation du protecteur de disque 3 sur le porte moyeu 4.

La première partie 31 et la seconde partie 32 du protecteur de disque 3 sont formées par emboutissage à partir d'une plaque en tôle.

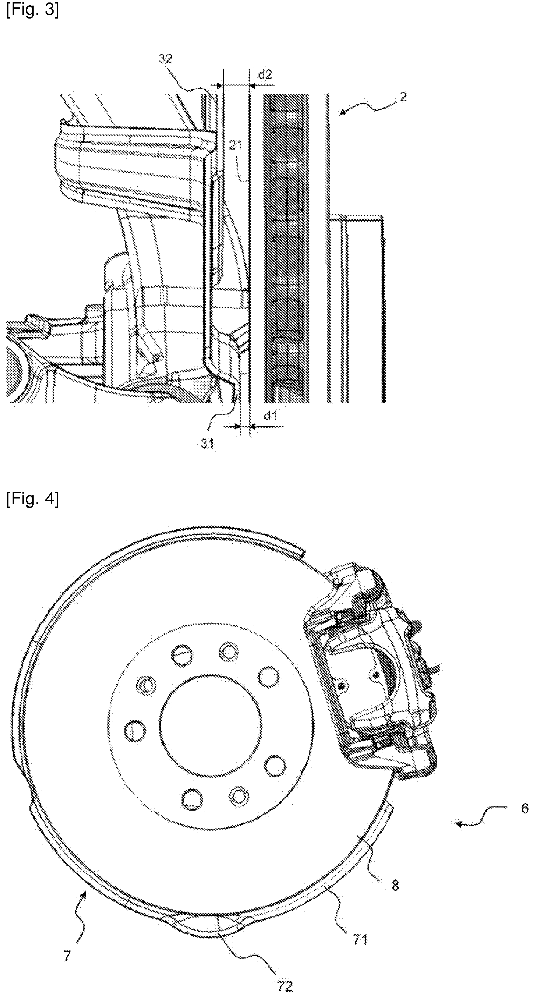

Sur la figure 4 est représenté un dispositif de freinage 6 destinée à freiner les roues arrières du véhicule qui comporte un protecteur de disque 7 qui comporte une paroi latérale 71 qui recouvre les bords du disque de frein 8, avec en partie inférieure, une ouverture 72 qui est formée pour évacuer les éléments externes qui peuvent se glisser entre la face interne du disque de frein 8 et le protecteur de disque 7.

## Revendications

1. Dispositif de freinage (1) pour un véhicule comportant un frein à disque (2) et un protecteur de disque (3), le protecteur de disque (3) recouvrant au moins partiellement la face interne du disque de frein (2), le protecteur de disque (3) présentant une première partie (31) positionnée à une première distance (d1) du disque de frein (2) et une seconde partie (32) positionnée à une seconde distance (d2) du disque de frein (2), ladite seconde distance (d2) étant supérieure à ladite première distance (d1), ledit protecteur de disque (3) comportant une ouverture centrale qui correspond à une ouverture centrale (11) du disque de frein (2), la seconde partie (32) formant une goulotte (33) qui s'étend d'un premier bord bas (34) du protecteur de disque (3) positionnée en regard du bas du disque de frein (2) vers l'ouverture centrale dudit protecteur de disque (3) permettant de guider vers le bas du disque de frein (2) des éléments externes qui peuvent se glisser entre le disque de frein (2) et la première partie (31) du protecteur de disque (3) lors du roulage du véhicule, **caractérisé en ce que** le goulotte (33) présente une largeur qui augmente de l'ouverture centrale (11) en direction du bord inférieur du disque de frein (2), la largeur de la goulotte (33) au niveau de l'ouverture centrale (11) étant entre trois à cinq fois inférieure à la largeur de la goulotte au niveau du bord inférieur du disque de frein (2).

2. Dispositif (1) selon la revendication 1, **caractérisé en ce que** la première partie du protecteur de disque (3) est à une première distance (d1) comprise entre 5 mm et 10 mm du disque de frein (2).

3. Dispositif (1) selon la revendication 1 ou 2, **caractérisé en ce que** la seconde partie (32) du protecteur de disque (3) est à une seconde distance (d2) comprise entre 11 mm et 15 mm du disque de frein (2).

4. Dispositif (1) selon l'une quelconque des revendications précédentes, **caractérisé en ce que** la première partie (31) et la seconde partie (32) du protecteur de disque (3) sont formées par emboutissage à partir d'une plaque en tôle.

5. Véhicule comportant un dispositif de freinage (1) selon l'une quelconque des revendications précédentes.

## Patentansprüche

1. Bremsvorrichtung (1) für ein Fahrzeug mit einer Scheibenbremse (2) und einem Scheibenschutz (3), wobei der Scheibenschutz (3) zumindest teilweise die Innenseite der Bremsscheibe (2) abdeckt, wobei der Scheibenschutz (3) einen ersten Abschnitt (31) aufweist, der in einem ersten Abstand (d1) von der Bremsscheibe (2) angeordnet ist, und einen zweiten Abschnitt (32) aufweist, der in einem zweiten Abstand (d2) von der Bremsscheibe (2) angeordnet ist, wobei der zweite Abstand (d2) größer ist als der erste Abstand (d1), wobei der Scheibenschutz (3) eine entsprechende zentrale Öffnung aufweist An einer zentralen Öffnung (11) der Bremsscheibe (2) bildet der zweite Teil (32) eine Rinne (33), die sich von einem ersten unteren Rand (34) des Scheibenschutzes (3), der gegenüber dem unteren Rand der Bremsscheibe (2) angeordnet ist, zu der zentralen Öffnung des Scheibenschutzes (3) erstreckt, die es ermöglicht, äußere Elemente, die beim Rollen des Fahrzeugs zwischen der Bremsscheibe (2) und dem ersten Teil (31) des Scheibenschutzes (3) gleiten können, nach unten zu führen, **dadurch gekennzeichnet, dass** die Rinne (33) eine Breite aufweist, die von der zentralen Öffnung (11) zum unteren Rand der Bremsscheibe (2) hin zunimmt, wobei die Breite der Rinne (33) an der zentralen Öffnung (11) drei- bis fünfmal kleiner ist als die Breite der Rinne an dem unteren Rand der Bremsscheibe (2).

2. Vorrichtung (1) nach Anspruch 1, **dadurch gekennzeichnet, dass** der erste Teil des Scheibenschutzes (3) in einem ersten Abstand (d1) zwischen 5 mm und 10 mm von der Bremsscheibe (2) angeordnet ist.

3. Vorrichtung (1) nach Anspruch 1 oder 2, **dadurch gekennzeichnet, dass** der zweite Teil (32) des Scheibenschutzes (3) in einem zweiten Abstand (d2) zwischen 11 mm und 15 mm von der Bremsscheibe (2) angeordnet ist.

4. Vorrichtung (1) nach einem der vorhergehenden Ansprüche, **dadurch gekennzeichnet, dass** der erste Teil (31) und der zweite Teil (32) des Scheibenschutzes (3) durch Tiefziehen aus einer Blechplatte gebildet sind.

5. Fahrzeug mit einer Bremsvorrichtung (1) nach einem der vorhergehenden Ansprüche.

## Claims

1. Braking device (1) for a vehicle comprising a disk brake (2) and a disk protector (3), the disk protector (3) covering at least partially the inner face of the brake disk (2), the disk protector (3) having a first part (31) positioned at a first distance (d1) from the brake disk (2) and a second part (32) positioned at a second distance (d2) from the brake disk (2), said second distance (d2) being greater than said first distance (d1), said disk protector (3) having a central opening which corresponds to a second distance (d2) the invention relates to a central opening (11) of the brake disk (2), the second part (32) forming a chute (33) which extends from a first bottom edge (34) of the disk protector (3) positioned facing the bottom of the brake disk (2) towards the central opening of the said disk protector (3) making it possible to guide, towards the bottom of the brake disk (2), outer items which can slide between the brake disk (2) and the first part (31) of the disk protector (3) when the vehicle is travelling, **characterised in that** the chute (33) has a width which increases from the centre opening (11) to the management of the lower edge of the brake disk (2), the width of the chute (33) to the level of the centre opening (11) being between three and five times smaller than the width of the chute to the level of the lower edge of the brake disk (2).

2. Device (1) according to claim 1, **characterised in that** the first part of the disk protector (3) is at a first distance (d1) comprised between 5 mm and 10 mm from the brake disk (2).

3. Device (1) according to Claim 1 or 2, **characterised in that** the second part (32) of the disk protector (3) is at a second distance (d2) of between 11 mm and 15 mm from the brake disk (2).

4. Device (1) according to any one of the previous claims, wherein the first part (31) and the second part (32) of the disk protector (3) are formed by stamping from a sheet metal plate.

5. Vehicle comprising a braking device (1) according to any one of the previous claims.
